# EUROPÄISCHE PATENTSCHRIFT

(11) **EP 1 218 087 B1**
(45) Veröffentlichungstag und Bekanntmachung des Hinweises auf die Patenterteilung: **01.10.2003**
(21) Anmeldenummer: 00954301.8
(22) Anmeldetag: 05.07.2000
(51) Int. Cl.: B01D 39/12, B01D 39/20

(54) **FLÄCHENGEFÜGE AUS METALL, INSBESONDERE ZUR FILTRATION UND VERFAHREN ZUR HERSTELLUNG EINES FLÄCHENGEFÜGES SOWIE VERWENDUNG DES FLÄCHENGEFÜGES**
PLANE METAL STRUCTURE, ESPECIALLY FOR FILTRATION AND METHOD FOR PRODUCING A PLANE STRUCTURE AS WELL AS THE USE OF A PLANE STRUCTURE
STRUCTURE PLATE EN METAL, EN PARTICULIER POUR LA FILTRATION, SON PROCEDE DE PRODUCTION ET SON UTILISATION

(30) Priorität: 27.08.1999 DE 19940792; 07.09.1999 US 152689 P
(43) Veröffentlichungstag der Anmeldung: 03.07.2002
(60) Teilanmeldung: 03002458.2
(73) Patentinhaber: GKD Gebr. Kufferath AG, 52353 Düren (DE)
(72) Erfinder: WIRTZ, Peter, D-52353 Düren (DE); MERTENS, Hans, D-52379 Langerwehe-Schlich (DE)
(74) Vertreter: Castell, Klaus, Dr.-Ing.
(86) Internationale Anmeldenummer: DE0002136
(87) Internationale Veröffentlichungsnummer: WO01015795

(56) Entgegenhaltungen:
- GB-A- 933 825
- NL-A- 8 105 081
- US-A- 5 679 441

## Beschreibung

Die Erfindung betrifft ein Flächengefüge aus Metall, insbesondere zur Filtration, und Verfahren zur Herstellung eines Flächengefüges sowie zur Verwendung des Flächengefüges.

Flächengefüge aus Metallgewebe werden vor allem zur Filtration und als Transportband verwendet. Hierbei besteht häufig die Forderung nach einem Gewebe mit einer besonders feinen Oberfläche und einer hohen Stabilität. Hierbei tritt das Problem auf, dass zur Erzielung einer besonders kleinen Porengröße auch besonders feine Drähte verwendet werden müssen und diese feinen Metallgewebe jedoch eine geringe Festigkeit haben.

Um trotzdem eine ausreichende Stabilität des Flächengefüges zu erzielen, werden daher feine Filterlagen auf ein groberes Stützgewebe aufgebracht. Dies ermöglicht es, eine hohe Stabilität eines Filtergewebes mit einer extrem feinen Porengrößenverteilung zu kombinieren.

Bei diesen Geweben hat sich jedoch herausgestellt, dass die an der Oberfläche befindlichen Poren leicht verstopfen und dadurch die Funktion des Siebes beeinträchtigen.

Dieses Problem kann durch den Übergang von einer Oberflächenfiltration zu einer Tiefenfiltration gelöst werden. Hierzu werden mehrere feine Filtergewebeschichten übereinander gelegt, so dass die Partikel beim Durchlaufen der feinen Gewebeschichten nach unterschiedlichen Weglängen zurückgehalten werden. Dies führt zu längeren Standzeiten der Siebe, da das Sieb erst dann vollständig verstopft ist, wenn sämtliche Sieblagen blockiert sind.

Die Herstellung derartiger Siebe aus mehreren Lagen feiner Gewebeschichten ist jedoch sehr aufwendig, da mehrere feine Gewebeschichten produziert und miteinander verbunden werden müssen.

Eine kostengünstigere Herstellungsweise eines zur Tiefenfiltration geeigneten Siebes sieht vor, dass auf einem Drahtgewebe Metallfasern thermisch aufgesintert werden und anschließend das Flächengefüge gewalzt wird (vgl. NL-A-8 105 081). Dadurch entsteht ebenfalls ein zur Tiefenfiltration geeignetes Flächengefüge, das jedoch den Nachteil hat, dass die Fasern nicht vollständig homogen aufgebracht werden können und dadurch Unterschiede in der Dichteverteilung entstehen. Das Sieb kann daher nicht optimal ausgelegt werden und dies führt zu Kompromissen bei der Festlegung der maximalen Porengröße und der Ausnutzung der zur Verfügung stehenden Filterfläche.

Die gesinterten Flächengefüge haben darüber hinaus den Nachteil, dass sie in Öfen erhitze werden müssen und diese Öfen nur spezielle Abmessungen aufweisen. Übliche Öfen haben beispielsweise eine Breite von 600 mm oder 1.200 mm und sind daher zu klein für die Herstellung von Bahnen mit 3000 mm Breite. Dies hat zur Folge, dass in der Praxis mehrere Platten aneinandergeschweißt werden. Dadurch entstehen jedoch Verluste bei der nutzbaren Filterfläche und Unebenheiten an der Oberfläche des Flächengefüges.

Die DE OS 1 961 050 beschreibt ein Flächengefüge aus Metalldrähten, bei dem zwischen Metalldrähten Innenfäden entweder verseilt oder als Monofilfäden angeordnet sind. Hierbei wird eine besondere Rauigkeit der Oberfläche der Fäden gefordert, die durch das Verseilen einzelner Monofilfäden oder durch das Aufrauhen der Oberfläche eines Monofilfadens entsteht. Ein derartiges Flächengefüge ist jedoch nur für eine besonders grobe Filtration zu verwenden und eine Änderung des Gefüges würde gemäß der Entgegenhaltung zu einer größeren Schlitzbildung führen. Insbesondere zu einer Tiefenfiltration sind derartige Gewebe nicht geeignet.

Der Erfindung liegt daher die Aufgabe zugrunde, ein Flächengefüge aus Metall, insbesondere zur Filtration, so weiterzuentwickeln, dass mit einem preiswert herstellbaren Flächengefüge optimale Filtrationsergebnisse erzielt werden können. Diese Aufgabe wird dadurch gelöst, dass zwischen Metalldraht ein Metallfasergarn eingearbeitet ist, bei dem ein einzelnes Kapillar einen Durchmesser von weniger als 100 µm, vorzugsweise weniger als 30 µm, aufweist, wobei ein Schnitt durch das Metallfasergarn (5 bis 12) mehr als 100, vorzugsweise mehr als 500 einzelne Kapillare aufweist.

Unter Metallfasergarn wird ein durch Spinnverfahren aus Fasern hergestelltes fadenförmiges Erzeugnis verstanden. Die hierbei verwendeten Fasern können ein Bündel extrem langer gesponnener Fasern sein. Die Fasern können jedoch auch gerissen oder gekürzt sein und zu einem Garn verdrillt sein. Vorzugsweise sind Metallfasergarne aus vielen verdrillten Fasern hergestellt, wobei durch den Faserdurchmesser, die Faserlänge und die Art der Verdrillung oder Nachbehandlung des Garnes unterschiedlichste Garnarten hergestellt werden können.

Im Gegensatz zum Metallfasergarn wird unter einem Metalldraht ein aus Stangenmaterial durch Drahtziehen oder durch Walzen hergestellter Draht verstanden.

Das Zusammenwirken von Metalldraht und Metallfasergarn bringt den groβen Vorteil, dass das zwischen dem Metalldraht angeordnete Metallfasergarn in einer geschützten Position z.B. die Aufgabe einer Tiefenfiltration wahrnehmen kann. Das Flächengefüge hat jedoch auch spezielle akustische Eigenschaften und eine hohe Flexibilität, die eine Verwendung in verschiedensten Einsatzbereichen ermöglichen.

Bei der Anwendung des erfindungsgemäßen Flächengefüges zur Filtration dient das Metailfasergarn als Filterkörper für eine Tiefenfiltration, während der Metalldraht das Metallfasergarn vor mechanischen Beeinträchtigungen schützt und die Entwässerung der Metallfaser velbessert. Der Draht legt sich an das Metallfasergarn an und verbessert dadurch das Ableiten der Flüssigkeit vom Garn, wodurch eine optimale Drainage entsteht.

Vorteilhaft ist es, wenn das Metallfasergarn einen größeren Durchmesser als der Metalldraht aufweist. Durch die Vergrößerung des Garnanteils kann beispielsweise bei der Filtration die Tiefenfiltrationswirkung erhöht werden, während ein Metalldraht geringeren Durchmessers ausreicht, um die Drainageund Schutzfunktion zu erfüllen.

Das Flächengeftüg kann als Geflecht, Gewirk oder ähnliches ausgebildet sein. Eine einfache Herstellung wird erreicht, wenn der Metalldraht mit dem Metallfasergarn verwebt ist. Dadurch entsteht ein Gewebe, das die Vorzüge eines Drahtgewebes mit den Vorzügen des Metallfasergarngewebes verbindet.

Als besonders vorteilhaft hat es sich bei der Herstellung derartiger Gewebe erwiesen, wenn der Metalldraht die Kette und das Metallfasergarn den Schuss des Gewebes bilden Das Metallfasergarn ist dadurch geschützt im Gewebe angeordnet und hat im Idealfall keine Knickstellen, die das Garn partiell übermäßig komprimieren könnten.

Gute Versuchsergebnisse wurden erzielt, indem als Metalldraht ein monofiler Draht verwendet wurde. Der monofile Draht ist einfach in der Verarbeitung und eignet sich besonders gut zur Drainage des Flächengefüges.

Vorteilhaft ist es, wenn das Flächengefüge so ausgebildet ist, dass der Metalldraht dem Flächengefüge eine glatte Oberfläche verleiht. Diese glatte Oberfläche kann mit mechanischen Mitteln einfach gereinigt werden und erlaubt es, ein Flächengefüge mit geringer Schichtdicke herzustellen.

Je nach Anwendungsfall kann es vorkommen, dass das beschriebene Flächengefüge eine zu geringe Festigkeit aufweist. In diesem Fall wird vorgeschlagen, dass das Fiächengefüge eine Stützschicht aus Metalldraht, vorzugsweise monofilern Draht, aufweist. Diese Stützschicht, die vorzugsweise an eines Seite des Gewebes angebracht ist, kann für Filtrationszwecke so grob gearbeitet sein, dass das Filtrat ungehindert durch die Stützschicht hindurchtritt. Je nach Anwendungsfall des Flächengefüges sind jedoch verschiedenste Arten an Stützschichten möglich.

Insbesondere bei der Verwendung einer Stützschicht wird vorgeschlagen, dass ein Metalldraht, vorzugsweise ein monofiler Draht, das Flächengefüge zusammenhält. Dieses Draht sollte so in das Flächengefüge eingearbeitet sein, dass eine ebene Oberfläche des Flächengefüges erhalten bleibt.

Die erfindungsgemäße Aufgabe wird auch durch ein Verfahren zur Herstellung eines Flächengefüges gelöst, bei dem ein mit einer Haut umhülltes Metallfasergarn mit einem Metalldraht zu einem Gewebe verwebt wird und anschließend die Haut entfernt wird.

Es hat sich herausgestellt, dass Metallfasergarne nicht einfach zu verweben sind und die Gefahr besteht, dass sie während des Webvorganges beschädigt werden. Erfindungsgemäß wird daher vorgesehen, dass das Metallfasergarn vor dem Verweben mit einer Haut unahüllt wird und nach dem Webvorgang diese Haut wieder entfernt wird. Die Haut hält die einzelnen Fasern des Garnes zusammen und bildet eine glatte Oberfläche, die den Webvorgang erleichtert.

Eine Verfahrensvariante sieht vor, dass die Haut mit einer Flüssigkeit entfernt wird. Als Haut kann beispielsweise Paraffin verwendet werden, das mit 60°C warmem Wasser abwaschbar ist.

Da das erfindungsgemäße Flächengefüge vollständig aus Metall besteht, ist es einfach zu verschweißen, und daher wird vorgeschlagen, dass das Gewebe zu einem Körper verschweißt wird. Dies ermöglicht es, konische Filterflächen, Filterronden oder beliebige Filtrationskörper herzustellen.

Vor allem für den Einsatz in der Lebensmittelindustrie wird vorgeschlagen, dass als Metallfasergarn und als Metalldraht Edelstahl verwendet wird.

Ein besonders bevorzugter Einsatzbereich des erfindungsgemäßen Flächengefüges ist die Tiefenfiltration.

Ein bevorzugtes Ausführungsbeispiel der Eifindung ist in der Zeichnung dargestellt und wird im folgenden näher beschrieben. Es zeigt
- Figur 1: eine Ansicht einer Seitenfläche des Flächengefüges,
- Figur 2: eine Ansicht der Unterseite des Flächengefüges,
- Figur 3: eine Ansicht der gegenüberliegenden Seite des Flächengefüges,
- Figur 4: eine weitere Ansicht des Flächengefüges und
- Figur 5: einen vergröβerten Ausschnitt der in Figur 3 gezeigten Ansicht.

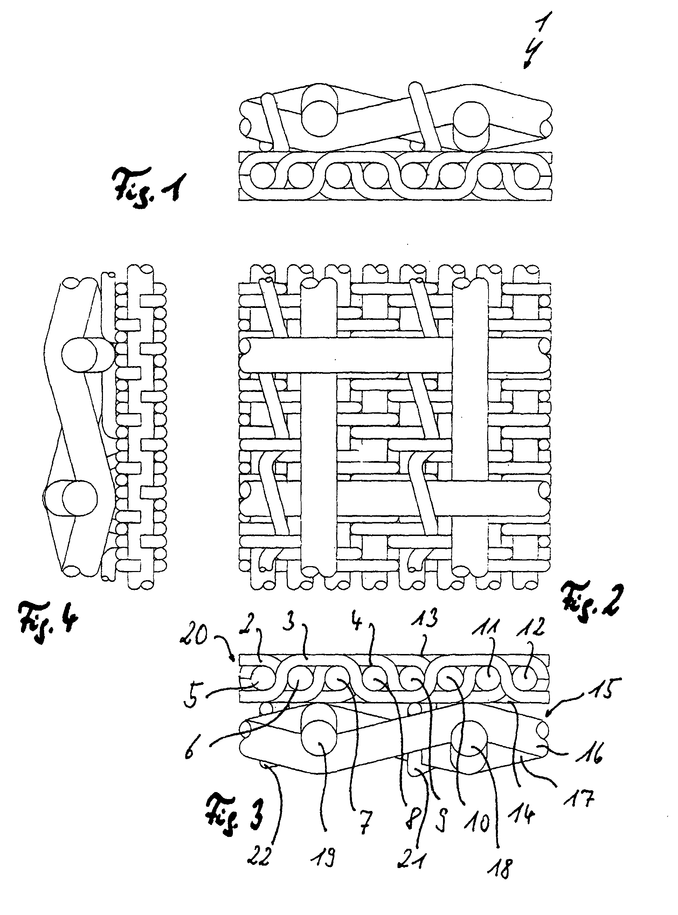

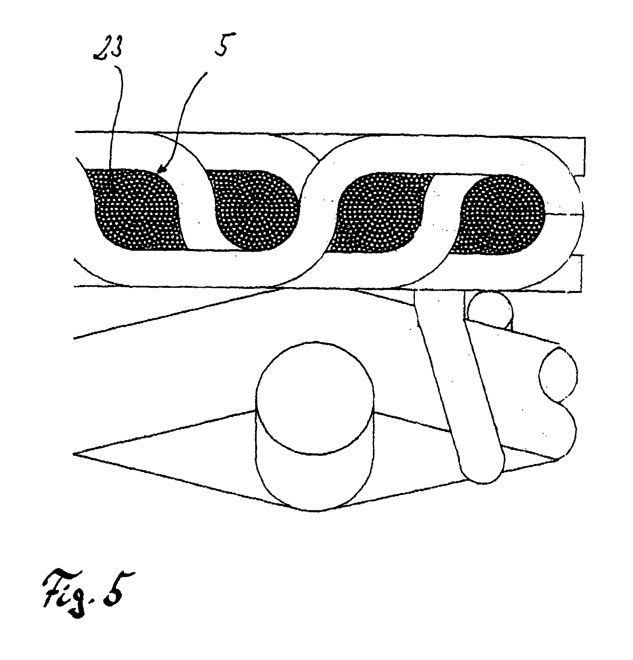

Das in den Figuren gezeigte Flächengefiüge 1 besteht aus einer Vielzahl an Metalldrähten 2, 3, 4, die mit einem Metallfasergarn 5 verwebt sind. Hierbei bilden die monofilen Metalldrähte 2, 3 und 4 die Kette, während das Metallfasergarn den Schuss bildet. Beispielsweise die Figur 3 zeit deutlich, wie beabstandet zueinander mehrere Metallfasergarnstränge 5, 6, 7, 8, 9, 10, 11,12 angeordnet sind und die monofilen Metalldrähte, wie beispielsweise der monofile Metalldraht 3, abwechselnd oberhalb von zwei Metallfasergarnen 6, 7 und unterhalb von zwei Metallfasergarnen 8, 9 geführt sind. Da der daneben liegende Metalldraht 4 um den Abstand eines Metallfasergarnes 6 versetzt, zunächst oberhalb zweier Metallfasergarne 7 und 8 und dann unterhalb zweier Metallfasergarne 9 und 10 geführt ist, werden die Metallfasergarne durch dazwischenliegende Metalldrähte beabstandet gehalten.

Die parallel zueinander angeordneten Metallfasergarne 5, 6, 7, 8, 9, 10, 11, 12 bilden eine Ebene, und die Oberflächen der Metalldrähte 2, 3, 4 bilden oberhalb und unterhalb dieser Ebene parallele Oberflächen 13 und 14.

Die obere Oberfläche 13 ist besonders glatt ausgestaltet, um einfach reinigbar zu sein und die untere Oberfläche 14 dient der Anlage einer Stützschicht 15. Die Stützschicht 15 wird wiederum aus einem Gewebe aus monofilen Metalldrähten 16, 17, 18, 19 gebildet, die unterhalb der zuvor beschriebenen Gewebeschicht angeordnet ist und von Metalldrähten 16 bis 19 mit einem größeren Durchmesser als den zuvor beschriebenen Metalldrähten 2, 3, 4 gebildet wird.

lm vorliegenden Fall bildet das Gewebe aus den Metalldrähten 2, 3, 4 und dem Metallfasergarn 5 bis 12 die Filtrationsschicht 20 und das Gewebe mit den dickeren Metalldrähten 16 bis 19 die Stützschicht 15. Die Stützschicht 15 ist durch relativ dünne Metalldrähte 21, 22 mit der Filterschicht 20 verbunden.

Das Zusammenwirken zwischen den Metalldrähten 2 bis 4 und dem Metallfasergarn 5 bis 12 zu einem festen Gefüge ist den Figuren 2 bis 5 und insbesondere einer Zusammenschau sämtlicher Figuren zu entnehmen. Für den Fachmann ergibt sich aus den Figuren der genaue Verlauf der einzelnen Drähte, der ein wesentliches Element der Erfindung darstellt.

Die Figuren stellen das Gewebe in stark vergrößerter Weise dar. Insbesondere der Figur 5 ist zu entnehmen, dass das Metallfasergarn 5 aus einem Metallfasergarnstrang aus vielen einzelnen Kapillaren 23 besteht. Der Metallfasergarnstrang 5 legt sich zwischen die monofilen Metalldrähte 2, 3 und 4 der Kette und füllt die von der Kette gebildeten Hohlräume vollständig aus. Dies ist an dem in Figur 5 dargestellten augenförmigen Querschnitt des Metallfasergarnstrangs 5 deutlich zu erkennen.

In der Praxis ist das Gewebe für eine Filterfeinheit von etwa 1 m bis 200 m ausgelegt.

Die verwendeten Metallfasergarne haben mehr als 500 einzelne Kapillare mit jeweils einem Durchmesser von unter 30 m, und die Feinheit dieses Materiales führt dazu, dass beim Verweben das Garn leicht beschädigt wird. Daher wird jeder Faden zunächst mit einer Paraffinschicht überzogen und erst anschließend verwebt. Die Paraffinschicht erleichtert den Webvorgang und schützt das Gewebe. Anschließend kann die Paraffinschicht in 60°C warmen Wasser abgewaschen werden, so dass die Filtrationseigenschaften des Metallfasergarnes wieder hergestellt werden.

Üblicherweise wird das so gebildete Flächengefüge anschließend zu Filterronden oder, je nach Anwendungsfall, zu anderen Filterkörpern verschweißt. Die Verfügbarkeit besonders breiter Webstühle zur Verarbeitung von Metalldrähten ermöglicht die Herstellung von Gewebebahnen mit mehreren Metern breite, die für unterschiedlichste Einsatzzwecke geeignet sind.

## Patentansprüche

1. Gewebe, Geflecht oder Gewirk (1) aus Metall, insbesondere zur Filtration, ***dadurch gekennzeichnet, dass*** zwischen Metalldraht (2 bis 4) ein Metallfasergarn (5 bis 12) eingearbeitet ist, bei dem ein einzelnes Kapillar einen Durchmesser von weniger als 100 µm, vorzugsweise weniger als 30 µm, aufweist, wobei ein Schnitt durch das Metallfasergarn (5 bis 12) mehr als 100, vorzugsweise mehr als 500 einzelne Kapillare aufweist.

2. Gewebe, Geflecht oder Gewirk nach Anspruch 1, ***dadurch gekennzeichnet, dass*** das Metallfasergarn (5 bis 12) einen größeren Durchmesser als der Metalldraht (3 bis 4) aufweist.

3. Gewebe, Geflecht oder Gewirk nach einem der vorhergehenden Ansprüche, ***dadurch gekennzeichnet dass*** der Metalldraht (2 bis 4) mit dem Metallfasergarn (5 bis 12) verwebt ist.

4. Gewebe, Geflecht oder Gewirk nach Anspruch 3, ***dadurch gekennzeichnet, dass*** der Metalldraht (2 bis 4) die Kette und das Metallfasergarn (5 bis 12) den Schuss eines Gewebes bilden.

5. Gewebe, Geflecht oder Gewirk nach einem der vorhergehenden Ansprüche, ***dadurch gekennzeichnet, dass*** der Metalldraht (2 bis 4) ein monofiler Draht ist.

6. Gewebe, Geflecht oder Gewirk nach einem der vorhergehenden Ansprüche, ***dadurch gekennzeichnet, dass*** der Metalldraht (2 bis 4) eine glatte Oberfläche (13, 14) bildet.

7. Gewebe, Geflecht oder Gewirk nach einem der vorhergehenden Ansprüche, ***dadurch gekennzeichnet, dass*** das Gewebe, Geflecht oder Gewirk (1) eine Stützschicht (15) aus Metalldraht (16 bis 19), vorzugsweise monofilem Draht, aufweist.

8. Gewebe, Geflecht oder Gewirk nach einem der vorhergehenden Ansprüche, ***dadurch gekennzeichnet, dass*** Metalldraht (22), vorzugsweise monofiler Draht, das Gewebe, Geflecht oder Gewirk (1) zusammenhält.

9. Verfahren zur Herstellung eines Gewebes, Geflechts oder Gewirks nach einem der Ansprüche 1 bis 8, ***dadurch gekennzeichnet, dass*** ein mit einer Haut umhülltes Metallfasergarn (5 bis 12) mit einem Metalldraht (2 bis 4) zu einem Gewebe verwebt und anschließend die Haut entfernt wird.

10. Verfahren nach Anspruch 9, ***dadurch gekennzeichnet, dass*** die Haut mit einer Flüssigkeit entfernt wird.

11. Verfahren nach einem der Ansprüche 9 oder 10, ***dadurch gekennzeichnet, dass*** das Gewebe zu einem Körper verschweißt wird.

12. Verfahren nach einem der Ansprüche 9 bis 11, ***dadurch gekennzeichnet, dass*** als Metallfasergarn (5 bis 12) und als Metalldraht (2 bis 4) Edelstahl verwendet wird.

13. Verwendung eines Gewebes, Geflechts oder Gewirks nach einem der Ansprüche 1 bis 8 für die Tiefenfiltration.

## Claims

1. A woven fabric, mesh, or knitted fabric (1) made of metal, particularly for filtration,
**characterized in that**
a metal fiber thread (5 to 12), in which a single capillary has a diameter of less than 100 micrometers, preferably less than 30 micrometers, is worked in between metal wire (2 to 4), a section through the metal fiber thread (5 to 12) having more than 100, preferably more than 500 individual capillaries.

2. The woven fabric, mesh, or knitted fabric according to Claim 1,
**characterized in that**
the metal fiber thread (5 to 12) has a greater diameter than the metal wire (3 to 4).

3. The woven fabric, mesh, or knitted fabric according to one of the preceding claims,
**characterized in that**
the metal wire (2 to 4) is interwoven with the metal fiber thread (5 to 12).

4. The woven fabric, mesh, or knitted fabric according to Claim 3,
**characterized in that**
the metal wire (2 to 4) forms the warp and the metal fiber thread (5 to 12) forms the weft of a woven fabric.

5. The woven fabric, mesh, or knitted fabric according to one of the preceding claims,
**characterized in that**
the metal wire (2 to 4) is a monofilament wire.

6. The woven fabric, mesh, or knitted fabric according to one of the preceding claims,
**characterized in that**
the metal wire (2 to 4) forms a smooth surface (13, 14).

7. The woven fabric, mesh, or knitted fabric according to one of the preceding claims,
**characterized in that**
the woven fabric, mesh, or knitted fabric (1) has a supporting layer (15) made of metal wire (16 to 19), preferably monofilament wire.

8. The woven fabric, mesh, or knitted fabric according to one of the preceding claims,
**characterized in that**
metal wire (22), preferably monofilament wire, holds together the woven fabric, mesh, or knitted fabric (1) .

9. A method of manufacturing a woven fabric, mesh, or knitted fabric according to one of Claims 1 to 8,
**characterized in that**
a metal fiber thread (5 to 12), which is enveloped by a skin, is woven with a metal wire (2 to 4) into a woven fabric and the skin is subsequently removed.

10. The method according to Claim 9,
**characterized in that**
the skin is removed using liquid.

11. The method according to one of Claims 9 or 10,
**characterized in that**
the woven fabric is welded to a body.

12. The method according to one of Claims 9 to 11,
**characterized in that**
stainless steel is used as the metal fiber thread (5 to 12) and as the metal wire (2 to 4).

13. A use of a woven fabric, mesh, or knitted fabric according to one of Claims 1 to 8 for deep-bed filtration.

## Revendications

1. Tissu, entrelacement ou maillage (1) en métal, particulièrement pour la filtration,
**caractérisé en ce**
**qu'**un brin en fibre métallique (5 à 12) est inséré entre le fil de métal (2 à 4), pour lequel un capillaire individuel possède un diamètre inférieur à 100 µm, de préférence inférieur à 30 µm, une section en coupe du brin en fibre métallique (5 à 12) possédant plus de 100 capillaires individuels, de préférence plus de 500.

2. Tissu, entrelacement ou maillage selon la revendication 1,
**caractérisé en ce que**
le brin en fibre métallique (5 à 12) possède un diamètre supérieur à celui du fil de métal (3 à 4).

3. Tissu, entrelacement ou maillage selon l'une des revendications ci-dessus,
**caractérisé en ce que**
le fil de métal (2 à 4) est tissé avec le brin en fibre métallique (5 à 12).

4. Tissu, entrelacement ou maillage selon la revendication 3,
**caractérisé en ce que**
le fil de métal (2 à 4) constitue la chaîne et le brin en fibre métallique (5 à 12) la trame d'un tissu.

5. Tissu, entrelacement ou maillage selon l'une des revendications ci-dessus,
**caractérisé en ce que**
le fil de métal (2 à 4) est un fil monofilaire.

6. Tissu, entrelacement ou maillage selon l'une des revendications ci-dessus,
**caractérisé en ce que**
le fil de métal (2 à 4) forme une surface lisse (13, 14).

7. Tissu, entrelacement ou maillage selon l'une des revendications ci-dessus,
**caractérisé en ce que**
le tissu, l'entrelacement ou le maillage (1) possèdent une couche de support (15) en fil de métal (16 à 19), de préférence un fil monofilaire.

8. Tissu, entrelacement ou maillage selon l'une des revendications ci-dessus,
**caractérisé en ce que**
le fil de métal (22), de préférence un fil monofilaire, maintient le tissu, l'entrelacement ou le maillage (1) .

9. Procédé pour la fabrication d'un tissu, d'un entrelacement ou d'un maillage selon l'une des revendications 1 à 8,
**caractérisé en ce**
**qu'**un brin de fibre métallique (5 à 12) gainé avec une pellicule est tissé avec un fil de métal (2 à 4) et ensuite la pellicule est retirée.

10. Procédé selon la revendication 9,
**caractérisé en ce que**
la pellicule est retirée avec un liquide.

11. Procédé selon la revendication 9 ou 10,
**caractérisé en ce que**
le tissu est soudé en un corps.

12. Procédé selon la revendication 9 à 11,
**caractérisé en ce**
**qu'**on utilise de l'acier spécial pour le brin de fibre métallique (5 à 12) et le fil de métal (2 à 4).

13. Utilisation d'un tissu, d'un entrelacement ou d'un maillage selon l'une des revendications 1 à 8 pour la filtration en profondeur.
